# EUROPEAN PATENT SPECIFICATION

(11) **EP 3 636 427 B1**
(45) Date of publication and mention of the grant of the patent: **08.06.2022**
(21) Application number: 18382723.7
(22) Date of filing: 11.10.2018
(51) Int. Cl.: B32B 5/16, B32B 5/22, B32B 5/24, B32B 5/26, B32B 5/30, B32B 7/08, B32B 15/14, B32B 15/16, B32B 27/12, B32B 27/14, B32B 27/28, B32B 27/30, B32B 3/04, F16L 59/02

(54) **FIREPROOF AND THERMAL INSULATOR PRODUCT**
FEUERFESTES UND WÄRMEISOLIERENDES PRODUKT
PRODUIT ISOLANT RÉSISTANT AU FEU ET THERMIQUE

(43) Date of publication of application: 15.04.2020
(73) Proprietor: Airbus Operations S.A.S., 31060 Toulouse (FR); Airbus Operations, S.L., 28906 Getafe Madrid (ES)
(72) Inventor: VÁZQUEZ CASTRO, Jesús Javier, 28906 Getafe (ES); GARCÍA MARTÍN, Diego, 28906 Getafe (ES); HERNAIZ LÓPEZ, Guillermo, 28906 Getafe (ES); BLANCO VARELA, Tamara, 28906 Getafe (ES); BARBARA, Olivier, 31060 Toulouse (FR)
(74) Representative: Elzaburu S.L.P.

(56) References cited:
- WO-A2-2011/133778
- US-A1- 2013 129 963

## Description

### Field of the invention

This invention refers to a product that provides structures and associated systems with protection against the consequences of a fire event, particularly flame penetration, and that also provides thermal insulation capability. The invention is particularly applicable in aircraft.

### Background of the invention

Many parts of the aircraft are submitted to fire events, and in order to ensure the normal operation of the aircraft, structure and associated systems have to be protected against the fire event consequences.

For these purposes several materials and solutions have been tested and installed to prevent the consequences of fire events. Two main effects need to be solved depending on the application: flame penetration and thermal insulation.

The flame penetration issue needs to be addressed keeping the fire enclosed in the designated area. On the other hand, the thermal insulation capability may allow the use of a wide range of materials for the structural applications having less decoupling temperature requirements.

An option widely used is the thermal blankets, mainly made of ceramic or silicone laminates with aluminum sheet. They are effective for flame penetration and thermal insulation, but are also expensive and heavy.

Some materials work against a fire event creating a charred layer of material which is porous, preventing flame penetration and providing insulation. This option is quite relevant in many cases due to its performance. However, structures submitted to vibrations cannot implement this solution due to the fact that the protection will be lost under operation conditions.

Adding materials like titanium whose fire resistance capability is much higher than the structural material to overcome the flame penetration issue has been widely used. As an example, the APU of an aircraft can be surrounded by a titanium firewall to prevent the aluminum, which acts as structural material, to be damaged, letting the fire come out of the tail cone in a fire event.

WO 2011/133778 A2 refers to a multilayer thermal insulation composite for fire protection applications. The composite includes a fibrous insulation layer, at least one inorganic heat absorbing layer disposed on one side of the fibrous insulation layer, and at least one superinsulation layer disposed on at least one side of the composite adjacent the heat absorbing layer or the fibrous insulation layer. The composite may further include a scrim layer comprising a high temperature resistant, flexible, woven or non-woven scrim or scrim and high temperature resistant material disposed around the multilayer thermal insulation composite partially or substantially totally encapsulating the composite. The composite is lightweight and flexible, exhibits reduced heat transfer to the cold-face, with improved thermal insulation capability.

US 2013/129963 A1 refers to a fire barrier laminate comprising: at least one fire barrier layer directly or indirectly coated onto at least one first polymeric flame propagation resistant film layer; at least one second film layer proximate to the fire barrier layer opposite the first polymeric flame propagation resistant film layer; at least one scrim layer disposed: (i) between the fire barrier layer and the first polymeric flame propagation resistant film layer; and/or (ii) between the fire barrier layer and the second film layer; and/or (iii) proximate to the first polymeric flame propagation resistant film layer opposite the fire barrier layer; and/or (iv) proximate to the second film layer opposite the fire barrier layer; wherein the fire barrier layer comprises inorganic fibers, at least one inorganic platelet material, optionally at least one organic binder and/or inorganic binder, and optionally at least one functional filler.

### Summary of the invention

The object of the present invention is to provide a product that is fireproof and has also good thermal insulation capability, which allows to avoid high temperatures at the structure around the fire source that could damage said structure.

The invention provides a fireproof and thermal insulator product comprising a material combination of:
- an Alkaline Earth Silicate material, and
- alumina,
such that the alumina is bonded onto the Alkaline Earth Silicate material, wherein the Alkaline Earth Silicate material and the alumina are in the form of a layer, the layer of Alkaline Earth Silicate being between 2 mm and 20 mm thick, and the layer of alumina being between 0.5 mm and 2 mm thick.

The invention provides the following advantages:
- Less weight than other fireproof standard materials and products.
- Small thickness needed to accomplish its function.
- Low cost.
- Fireproofness capabilities ensured.
- Low density.
- Biodegradable Materials.
- Health&Safety Compliant.
- Environmentaly Friendly.

Other characteristics and advantages of the present invention will be clear from the following detailed description of several embodiments illustrative of its object in relation to the attached figures.

### Brief description of drawings

Figure 1 shows a schematic view of an embodiment of a fireproof and thermal insulator product of the invention.
Figure 2 shows a schematic view of another embodiment of a fireproof and thermal insulator product of the invention.
Figure 3 shows an example of the attachment of an embodiment of a fireproof and thermal insulator product of the invention to the main structure to be protected.
Figure 4 shows another example of the attachment of an embodiment of a fireproof and thermal insulator product of the invention to the main structure to be protected.

### Detailed description of the invention

It is important to take into account that the "fireproof" concept is defined by aeronautical regulations such as:
- FAR/JAR 25.1191: Firewalls-Definition.
- FAR/JAR 25.865: Fire Protection Of Flight Controls, Engine Mounts And Other Flight Structures.

The basic configuration of the fireproof and thermal insulator product 1 of the invention comprises a material combination of an Alkaline Earth Silicate material (AES), and alumina, such that the alumina is bonded onto the Alkaline Earth Silicate material or is diffused inside the Alkaline Earth Silicate material.

This product stops the flame and avoids flame passing-through.

In an embodiment of the invention the product 1 additionally comprises a cover 3. The purpose of the cover 3 is to protect the material combination of Alkaline Earth Silicate material and alumina from aggressive fluids and water/humidity, that could potentially damage the fireproof behaviour. It also avoids accidental damages (scratches, tear during assembly or in-service, etc.).

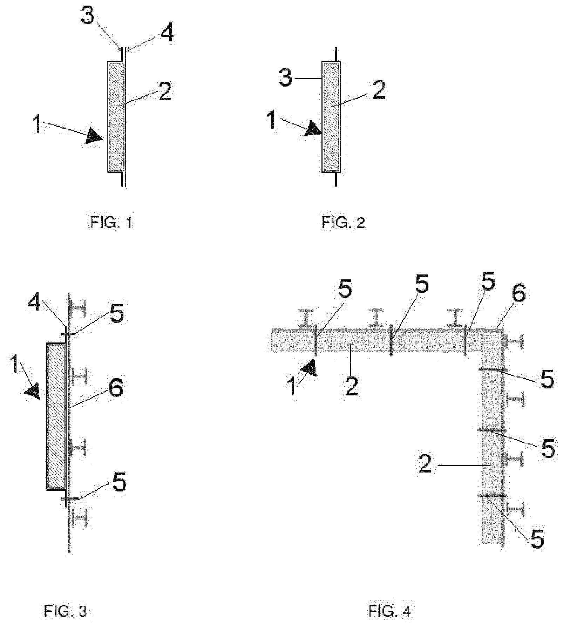

In an embodiment of the invention the cover 3 completely surrounds the part 2 (constituted by the material combination of the Alkaline Earth Silicate material and the alumina) by both faces and its edges (see Figure 2).

The cover 3 can be made of any polyvinyl film, polyimide film, plastic film, glass fibre or carbon fibre, or can be a thin metal sheet.

In another embodiment of the invention the product 1 additionally comprises a support 4 bonded or attached to the part 2 constituted by the material combination of the Alkaline Earth Silicate material and the alumina. This support 4 provides means to attach the product 1 of the invention to the desired place. The support 4 also protects the material combination of Alkaline Earth Silicate material and alumina from aggressive fluids and water/humidity, that could potentially damage the fireproof behaviour, and also avoids accidental damages (scratches, tear during assembly or in-service, etc.).

The support 4 can be made of glass fibre or carbon fibre or can be a thin metal sheet, or a polyvinyl film.

Figure 1 shows a schematic view of an embodiment of a fireproof and thermal insulator product 1 of the invention with a cover 3 and a support 4.

In a specific embodiment, the support 4 is not needed, and the product 1 with the cover 3 is directly attached to the structure.

The Alkaline Earth Silicate material and the alumina are in the form of a layer, the alumina layer being bonded onto the Alkaline Earth Silicate material layer.

The thickness of the Alkaline Earth Silicate material is between 2 mm and 20 mm thick, and the thickness of the alumina layer is between 0.5 mm and 2 mm thick.

More preferably, the thickness of the Alkaline Earth Silicate material is preferably between 2 mm and 10 mm thick, and the thickness of the alumina layer is preferably between 0.5 mm and 2 mm thick.

In a specific embodiment the layer of Alkaline Earth Silicate is 5 mm thick and the layer of alumina is 0.5 mm thick.

This specific material combination (Alkaline Earth Silicate material of 5mm thick + Alumina of 0.5mm thick) has been tested fulfilling the FAR/JAR 25 regulations regarding firewalls (FAR/JAR25.1191 & FAR/JAR25.865), that is:
- Direct flame impingement for 15min.
- Calibrated Flame of 1100ºC at a distance of 100mm from the specimen.
- Calibrated Heat Flux.
- Specimen under vibration of 50 Hz (reduced to 16.6 Hz after 5 min).
- No load applied.
- Material was bonded over a glass fibre laminate just for attachment to the test rig purposes.

The result after the 15 minutes required with the 1100°C flame, was that not only there was no pass through of the flame, but also the temperature measured at the rear part of the specimen was lower than 60°C.

Furthermore, the attachment of the product 1 of the invention to the main structure 6 to be protected can be done by attaching the support 4 using attaching means 5, such as fasteners or bolts (see Fig. 3).

For the embodiments without any support 4, the attachment to the main structure 6 can be done directly through the part 2 constituted by the material combination of the Alkaline Earth Silicate material and the alumina by means of fasteners, or any other attaching means 5 that does not tear out the part 2 constituted by the material combination of the Alkaline Earth Silicate material and the alumina (see Fig. 4).

The poduct 1 of the invention is particularly applicable in aircraft. Specifically, it can provide fire protection, thermal protection or both protections to several elements of an aircraft, for example:
- Section 19.1 Firewall (fire protection).
- Pylon lower spar (thermal protection).
- Pylon bleed area FSS, nacelle fan doors, nacelle Inner Fixed Structure & Bifi, EM thrust rods (thermal and fire protection for all of them).

The product 1 of the invention is also applicable to helicopter engine compartments, for example:
- Engine deck.
- Cowlings.

## Claims

1. Fireproof and thermal insulator product (1), which comprises a material combination of:
- an Alkaline Earth Silicate material, and
- alumina,
such that the alumina is bonded onto the Alkaline Earth Silicate material, wherein the Alkaline Earth Silicate material and the alumina are in the form of a layer, the layer of Alkaline Earth Silicate being between 2 mm and 20 mm thick, and the layer of alumina being between 0.5 mm and 2 mm thick.

2. Fireproof and thermal insulator product (1), according to claim 1, that additionally comprises a cover (3).

3. Fireproof and thermal insulator product (1), according to claim 2, wherein the cover (3) completely surrounds the part (2) constituted by the material combination of the Alkaline Earth Silicate material and the alumina.

4. Fireproof and thermal insulator product (1), according to claim 2 or 3, wherein the cover (3) is made of any polyvinyl film, polyimide film, plastic film, glass fibre or carbon fibre, or it is a thin metal sheet.

5. Fireproof and thermal insulator product (1), according to claim 1, 2 or 4, that additionally comprises a support (4) bonded or attached to the part (2) constituted by the material combination of the Alkaline Earth Silicate material and the alumina.

6. Fireproof and thermal insulator product (1), according to claim 5, wherein the support (4) is made of glass fibre or carbon fibre, or it is a thin metal sheet, or a polyvinyl film.

7. Fireproof and thermal insulator product (1), according to any of the previous claims, wherein the layer of Alkaline Earth Silicate is between 2 mm and 10 mm thick.

8. Fireproof and thermal insulator product (1), according to claim 7, wherein the layer of Alkaline Earth Silicate is 5 mm thick and the layer of alumina is 0.5 mm thick.

9. Fireproof and thermal insulator product (1), according to any of the previous claims, that additionally comprises attaching means (5) for attachment of the product (1) to the main structure (6) to be protected.

## Patentansprüche

1. Feuerfestes und wärmeisolierendes Produkt (1), das eine Materialkombination umfasst aus:
- einem Erdalkalimetallsilikatmaterial und
- Aluminiumoxid,
so dass das Aluminiumoxid auf das Erdalkalimetallsilikatmaterial gebondet ist, wobei das Erdalkalimetallsilikatmaterial und das Aluminiumoxid in Form einer Schicht vorliegen, wobei die Schicht des Erdalkalisilikats zwischen 2 mm und 20 mm dick ist und die Schicht des Aluminiumoxids zwischen 0,5 mm und 2 mm dick ist.

2. Feuerfestes und wärmeisolierendes Produkt (1) nach Anspruch 1, das zusätzlich eine Abdeckung (3) umfasst.

3. Feuerfestes und wärmeisolierendes Produkt (1) nach Anspruch 2, wobei die Abdeckung (3) das Teil (2) vollständig umgibt, welches durch die Materialkombination des Erdalkalimetallsilikatmaterials und des Aluminiumoxids gebildet ist.

4. Feuerfestes und wärmeisolierendes Produkt (1) nach Anspruch 2 oder 3, wobei die Abdeckung (3) aus jedwedem Polyvinylfilm, Polyimidfilm, Kunststofffilm, Glasfaser oder Kohlefaser gefertigt ist oder ein dünnes Metallblech ist.

5. Feuerfestes und wärmeisolierendes Produkt (1) nach Anspruch 1, 2 oder 4, das zusätzlich einen Träger (4) umfasst, der an das Teil (2), welches durch die Materialkombination des Erdalkalisilikatmaterials und des Aluminiumoxids gebildet ist, gebondet oder daran befestigt ist.

6. Feuerfestes und wärmeisolierendes Produkt (1) nach Anspruch 5, wobei der Träger (4) aus Glasfaser oder Kohlefaser gefertigt ist oder ein dünnes Metallblech oder ein Polyvinylfilm ist.

7. Feuerfestes und wärmeisolierendes Produkt (1) nach einem der vorhergehenden Ansprüche, wobei die Schicht des Erdalkalimetallsilikats zwischen 2 mm und 10 mm dick ist.

8. Feuerfestes und wärmeisolierendes Produkt (1) nach Anspruch 7, wobei die Schicht aus Erdalkalimetallsilikat 5 mm dick ist und die Schicht aus Aluminiumoxid 0,5 mm dick ist.

9. Feuerfestes und wärmeisolierendes Produkt (1) nach einem der vorhergehenden Ansprüche, das zusätzlich Befestigungsmittel (5) zum Befestigen des Produkts (1) an der zu schützenden Hauptstruktur (6) umfasst.

## Revendications

1. Produit résistant au feu et isolant thermique (1), qui comprend une combinaison de matériaux :
- d'un matériau à base de silicate alcalino-terreux, et
- d'alumine,
de telle sorte que l'alumine est collée sur le matériau à base de silicate alcalino-terreux, dans lequel le matériau à base de silicate alcalino-terreux et l'alumine se présentent sous la forme d'une couche, la couche de silicate alcalino-terreux faisant entre 2 mm et 20 mm d'épaisseur, et la couche d'alumine faisant entre 0,5 mm et 2 mm d'épaisseur.

2. Produit résistant au feu et isolant thermique (1) selon la revendication 1, qui comprend également un revêtement (3).

3. Produit résistant au feu et isolant thermique (1) selon la revendication 2, dans lequel le revêtement (3) entoure entièrement la partie (2) constituée par la combinaison de matériaux du matériau à base de silicate alcalino-terreux et de l'alumine.

4. Produit résistant au feu et isolant thermique (1) selon la revendication 2 ou 3, dans lequel le revêtement (3) est constitué de n'importe quel film de polyvinyle, film de polyimide, film de plastique, fibre de verre ou fibre de carbone, ou bien il s'agit d'une fine tôle métallique.

5. Produit résistant au feu et isolant thermique (1) selon la revendication 1, 2 ou 4, qui comprend également un support (4) collé ou attaché à la partie (2) constituée par la combinaison de matériaux du matériau à base de silicate alcalino-terreux et de l'alumine.

6. Produit résistant au feu et isolant thermique (1) selon la revendication 5, dans lequel le support (4) est constitué d'une fibre de verre ou d'une fibre de carbone, ou bien il s'agit d'une fine tôle métallique, ou d'un film de polyvinyle.

7. Produit résistant au feu et isolant thermique (1) selon l'une quelconque des revendications précédentes, dans lequel la couche de silicate alcalino-terreux fait entre 2 mm et 10 mm d'épaisseur.

8. Produit résistant au feu et isolant thermique (1) selon la revendication 7, dans lequel la couche de silicate alcalino-terreux fait 5 mm d'épaisseur et la couche d'alumine fait 0,5 mm d'épaisseur.

9. Produit résistant au feu et isolant thermique (1) selon l'une quelconque des revendications précédentes, qui comprend également des moyens de fixation (5) pour la fixation du produit (1) à la structure principale (6) devant être protégée.
